# EUROPEAN PATENT APPLICATION

(11) **EP 2 233 198 A1**
(43) Date of publication of application: **29.09.2010**
(21) Application number: 08863054.6
(22) Date of filing: 16.12.2008
(51) Int. Cl.: B01D 63/10, C02F 1/44, F01D 15/00, G06K 17/00

(54) **SPIRAL TYPE FILM FILTERING DEVICE AND MOUNTING MEMBER, AND FILM FILTERING DEVICE MANAGING SYSTEM AND FILM FILTERING DEVICE MANAGING METHOD USING THE SAME**

(30) Priority: 17.12.2007 JP 2007324909
(71) Applicant: Nitto Denko Corporation, Ibaraki-shi Osaka 567-8680 (JP)
(72) Inventor: KONISHI, Takahisa, Ibaraki-shi Osaka 567-8680 (JP); MARUYAMA, Kouji, Ibaraki-shi Osaka 567-8680 (JP); KOUNO, Toshiki, Ibaraki-shi Osaka 567-8680 (JP); HIRANO, Keisuke, Ibaraki-shi Osaka 567-8680 (JP); OOTANI, Akira, Ibaraki-shi Osaka 567-8680 (JP); YOSHIKAWA, Hiroshi, Ibaraki-shi Osaka 567-8680 (JP); IKEYAMA, Norio, Ibaraki-shi Osaka 567-8680 (JP)
(74) Representative: Sajda, Wolf E.
(86) International application number: PCT/JP2008/072879
(87) International publication number: WO 2009/078412

(57) **Abstract**

Provided are a spiral type membrane filtering device (50) by which an electric component can be re-used and a mounting member (42), as well as a membrane filtering device managing system and a membrane filtering device managing method using the same. An interconnector (42) attachable and detachable to a membrane element (10) is provided with a sensor (32) that detects the property of liquid such as raw water or permeated water that flows within a membrane filtering device (50), or a power generating section (26). Therefore, even if the membrane element (10) is to be replaced, the sensor (32) or the power generating section (26) can be re-used by re-mounting the interconnector (42) onto a new membrane element (10). Also, since there is no need to add a change to the membrane element (10), a conventional membrane element can be used as it is.

## Description

### TECHNICAL FIELD

The present invention relates to a spiral type membrane filtering device equipped with a spiral type membrane element in which a separation membrane, a supply side flow path material, and a permeation side flow path material in a laminated state are wound in a spiral form around a central pipe, and a permeated liquid that is filtered by the separation membrane from a raw liquid supplied via a raw liquid flow path formed by the supply side flow path material is guided to the central pipe via the permeation side flow path material, and to a mounting member as well as to a membrane filtering device managing system and a membrane filtering device managing method using the same.

### BACKGROUND ART

A spiral type membrane filtering device (hereinafter simply referred to as the "membrane filtering device" is known that is constructed by arranging a plurality of the aforesaid spiral type membrane elements (hereinafter simply referred to as the "membrane element") in a line and connecting between the central pipes of adjacent membrane elements with use of an interconnector (connecting section). The plurality of membrane elements that are connected in this manner are housed, for example, in an outer vessel formed of resin, and are treated as one membrane filtering device (for example, refer to Patent Document 1).

A membrane filtering device of this kind is generally used for obtaining purified permeated water (permeated liquid) by filtering raw water (raw liquid) such as waste water or sea water. Particularly in a large-scale plant or the like, numerous membrane filtering devices are held by a rack referred to as a train, whereby management of processing characteristics (pressure, water quality and water amount of the permeated water, and the like) is carried out train by train.

However, when the management of processing characteristics is carried out train by train as described above, it is difficult to specify the location of an inconvenience when the inconvenience occurs in the membrane element or the connecting section of only a part of the membrane filtering devices among the numerous membrane filtering devices that are held by a train, thereby raising a problem in that a lot of labor will be required in the specifying work.

Also, with the construction in which the numerous membrane filtering devices equipped with the plurality of membrane elements are held by the train as described above, the fouling degree of the separation membrane and the load imposed when the raw liquid is filtered by the separation membrane will differ depending on the position of each membrane filtering device in the train or the position of each membrane element within each membrane filtering device.
Therefore, in replacing the membrane elements, optimization of the arrangement and combination of the membrane elements is carried out so that an optimum processing performance can be eventually exhibited in the whole train, by housing new membrane elements and still usable membrane elements in a suitable combination within the outer vessel. However, in the current situation, the optimization is carried out only based on the term of use, so that it is not possible to say that a sufficient optimization is carried out.

Further, the determination of whether a maintenance such as cleaning or replacing of the membrane elements is to be carried out or not is made based on the processing characteristics for each train, so that there is a case in which the maintenance is not necessarily carried out suitably according to the position or the term of use depending on the membrane elements. In other words, depending on the cases, there is a case in which some membrane elements are in a state where it is too late to perform the maintenance or a case in which the maintenance is carried out at a stage earlier than needed.

In order to cope with the aforementioned problems, the following can be made by using a technique such as disclosed in Patent Document 1 described above. Specifically, for each membrane element, the data related to the aforesaid processing characteristics are stored in advance in a wireless tag (RFID tag) disposed in the membrane element, and the data are read out from each wireless tag, whereby management of the processing characteristics can be carried out for each membrane element.
However, even in a case in which the management is carried out based on only the data stored in advance in such a wireless tag, the state of each membrane element sometimes changes time by time, so that it is not possible to say that the precision of management is sufficient. Thus, when the state of each membrane element can be detected in real time, the management can be carried out with a better precision.

Therefore, there is also known a method of detecting the state of each membrane element in real time by using a sensor or the like (for example, refer to Patent Document 2). Patent Document 2 discloses a construction in which electric power is supplied to the sensor by using a wireless tag, a construction in which electric power is supplied to the sensor from a battery, or the like. The battery is chargeable, and can also be charged by using a wireless tag.

Patent Document 1: Japanese Unexamined Patent Application Publication JP-A-2007-527 318
Patent Document 2: International Publication No. 2007/030647

### DISCLOSURE OF THE INVENTION

### PROBLEMS TO BE SOLVED BY THE INVENTION

However, when an electric component such as the sensor described above is directly mounted on a membrane element, the membrane element is replaced with a new membrane element at the time when the membrane element is fouled to some extent, so that the electric component is also replaced at that time. Therefore, a still usable electric component will be replaced, thereby raising a problem of requiring an unnecessary cost.

Also, the method determines the presence or absence of the need for replacement by detecting the state of each membrane element by using a sensor or the like. Therefore, though a change in the state of each membrane element can be confirmed, it is difficult to specify also the causes of the change. For example, even in a case in which a change in the property of the liquid such as permeated water or raw water occurs in any one of the membrane elements, there are cases in which the cause thereof is due to biofouling that is generated by adhesion of a proliferated microorganism to the membrane and cases in which the cause thereof is due to a scale that is generated by adhesion of salts deposited by concentration of the liquid to the membrane.

Therefore, even if the change in the state in each membrane element can be confirmed, the method of maintenance that should be carried out in accordance with the cause of the change differs, so that the maintenance cannot be carried out well unless the cause is specified. Also, when the cause is erroneously specified, not only a good effect may not be obtained even if the maintenance is carried out but also, conversely, a problem of decreasing the lifetime of each membrane element may be raised.

The present invention has been made in view of the aforementioned circumstances, and an object thereof is to provide a spiral type membrane filtering device by which an electric component can be re-used and a mounting member, as well as a membrane filtering device managing system and a membrane filtering device managing method using the same. Also, an object of the present invention is to provide a spiral type membrane filtering device by which the spiral type membrane filtering device can be managed with a better precision and a mounting member, as well as a membrane filtering device managing system and a membrane filtering device managing method using the same.

### MEANS FOR SOLVING THE PROBLEMS

A spiral type membrane filtering device according to a first aspect of the present invention relates to the spiral type membrane filtering device equipped with a spiral type membrane element in which a separation membrane, a supply side flow path material, and a permeation side flow path material in a laminated state are wound in a spiral form around a central pipe, and a permeated liquid that is filtered by the separation membrane from a raw liquid supplied via a raw liquid flow path formed by the supply side flow path material is guided to the central pipe via the permeation side flow path material, the spiral type membrane filtering device comprising:
a mounting member attachable and detachable to the spiral type membrane element; and
a sensor disposed in the mounting member for detecting a property of the liquid flowing within the spiral type membrane filtering device.

According to the present invention, the sensor for detecting the property of the liquid flowing through the spiral type membrane filtering device is provided in the mounting member that is attachable and detachable to the spiral type membrane element. Therefore, even if the spiral type membrane element is to be replaced, the sensor can be re-used by re-mounting the mounting member onto a new spiral type membrane element. Also, since there is no need to add a change to the spiral type membrane element, a conventional spiral type membrane element can be used as it is.

A spiral type membrane filtering device according to a second aspect of the present invention relates to the spiral type membrane filtering device, wherein the mounting member is an interconnector that connects between the central pipes of a plurality of the spiral type membrane elements.

According to the present invention, the electric component such as a sensor or a power generating section is disposed in the interconnector that connects between the central pipes of the plurality of spiral type membrane elements. Therefore, even if the spiral type membrane element is to be replaced, the electric component can be re-used by re-mounting the interconnector onto a new spiral type membrane element.

A spiral type membrane filtering device according to a third aspect of the present invention relates to the spiral type membrane filtering device, comprising a power generating section for generating electric power by using the sensor.

According to the present invention, a larger amount of electric power can be ensured by performing power generation in the power generating section with use of the sensor that detects the property of the liquid flowing through the spiral type membrane filtering device. The electric power supplied from the power generating section can be supplied to each section provided in the spiral type membrane filtering device. The sections may include the sensor, and may include another sensor or an electric component other than the sensor that is provided in the spiral type membrane filtering device.

A spiral type membrane filtering device according to a fourth aspect of the present invention relates to the spiral type membrane filtering device, wherein the sensor comprises a rotor that rotates by a fluid pressure of the liquid flowing within the spiral type membrane filtering device, and
the power generating section generates electric power based on rotation of the rotor.

According to the present invention, the rotor provided in the sensor rotates by the fluid pressure of liquid when the liquid is flowing within the spiral type membrane filtering device, whereby power generation is carried out in the power generating section based on the rotation. Therefore, the power generation can be carried out efficiently by using the rotor provided in the sensor.

A spiral type membrane filtering device according to a fifth aspect of the present invention relates to the spiral type membrane filtering device, wherein the sensor is a flow rate sensor that detects the flow rate of the liquid based on the rotation speed or rotation number of the rotor.

According to the present invention, the rotor provided in the flow rate sensor rotates by the fluid pressure of liquid when the liquid is flowing within the spiral type membrane filtering device, whereby the flow rate of the liquid can be detected by the flow rate sensor based on the rotation number thereof, and also power generation can be carried out in the power generating section based on the rotation of the rotor. Therefore, the power generation can be carried out efficiently by using the rotor provided in the flow rate sensor.

A spiral type membrane filtering device according to a sixth aspect of the present invention relates to the spiral type membrane filtering device equipped with a plurality of spiral type membrane elements in which a separation membrane, a supply side flow path material, and a permeation side flow path material in a laminated state are wound in a spiral form around a central pipe, and a permeated liquid that is filtered by the separation membrane from a raw liquid supplied via a raw liquid flow path formed by the supply side flow path material is guided to the central pipe via the permeation side flow path material, the spiral type membrane filtering device comprising:
a mounting member attachable and detachable to the spiral type membrane elements; and
a power generating section disposed in the mounting member.

According to the present invention, the power generating section is provided in the mounting member that is attachable and detachable to the spiral type membrane element. Therefore, even if the spiral type membrane element is to be replaced, the power generating section can be re-used by re-mounting the mounting member onto a new spiral type membrane element. Also, since there is no need to add a change to the spiral type membrane element, a conventional spiral type membrane element can be used as it is.

Also, a larger amount of electric power can be ensured by performing power generation in the power generating section. The electric power supplied from the power generating section can be supplied to each section provided in the spiral type membrane filtering device. The sections may include the sensor, and may include another sensor or an electric component other than the sensor that is provided in the spiral type membrane filtering device.

A spiral type membrane filtering device according to a seventh aspect of the present invention relates to the spiral type membrane filtering device, wherein the power generating section generates electric power by a fluid pressure of the liquid flowing within the spiral type membrane filtering device.

According to the present invention, when liquid is flowing within the spiral type membrane filtering device, power generation can be carried out efficiently by the fluid pressure of the liquid.

A spiral type membrane filtering device according to a eighth aspect of the present invention relates to the spiral type membrane filtering device, comprising a rotor that rotates by a fluid pressure of the liquid flowing within the spiral type membrane filtering device, wherein the power generating section generates electric power based on rotation of the rotor.

According to the present invention, the rotor rotates by the fluid pressure of liquid when the liquid is flowing within the spiral type membrane filtering device, whereby power generation is carried out in the power generating section based on the rotation. Therefore, the power generation can be carried out efficiently with a simple construction such as providing a rotor within the spiral type membrane filtering device.

A spiral type membrane filtering device according to a ninth aspect of the present invention relates to the spiral type membrane filtering device, comprising a flow rate sensor that detects the flow rate of the liquid based on the rotation number of the rotor.

According to the present invention, the rotor provided in the flow rate sensor rotates by the fluid pressure of liquid when the liquid is flowing within the spiral type membrane filtering device, whereby the flow rate of the liquid can be detected by the flow rate sensor based on the rotation number thereof, and also power generation can be carried out in the power generating section based on the rotation of the rotor. Therefore, the power generation can be carried out efficiently by using the rotor provided in the flow rate sensor.

A spiral type membrane filtering device according to a tenth aspect of the present invention relates to the spiral type membrane filtering device, comprising a capacitor section for storing electric power supplied from the power generating section.

According to the present invention, the electric power supplied from the power generating section can be stored in the capacitor section, so that a further larger amount of electric power can be ensured, and each section provided in the spiral type membrane filtering device can be operated by using the electric power.

A spiral type membrane filtering device according to a eleventh aspect of the present invention relates to the spiral type membrane filtering device, comprising a wireless tag attached to the spiral type membrane element.

According to the present invention, management of the processing characteristics of the spiral type membrane element can be carried out by storing data in advance in the wireless tag and reading out the data from the outside. Therefore, the management can be carried out at a higher precision based on the data stored in the wireless tag and the data obtained in each section such as the sensor.

A mounting member according to a twelfth aspect of the present invention relates to the mounting member attachable and detachable to a spiral type membrane element in which a separation membrane, a supply side flow path material, and a permeation side flow path material in a laminated state are wound in a spiral form around a central pipe, and a permeated liquid that is filtered by the separation membrane from a raw liquid supplied via a raw liquid flow path formed by the supply side flow path material is guided to the central pipe via the permeation side flow path material, the mounting member comprising a sensor or a power generating section.

According to the present invention, the sensor or the power generating section is provided in the mounting member that is attachable and detachable to the spiral type membrane element. Therefore, even if the spiral type membrane element is to be replaced, the sensor or the power generating section can be re-used by re-mounting the mounting member onto a new spiral type membrane element. Also, since there is no need to add a change to the spiral type membrane element, a conventional spiral type membrane element can be used as it is.

A membrane filtering device managing system according to a thirteenth aspect of the present invention relates to the membrane filtering device managing system for managing the spiral type membrane elements that are disposed in a plurality and arranged in an axial line direction in the spiral type membrane filtering device, the membrane filtering device managing system comprising:
data obtaining means for obtaining data from the sensor;
comparison data storing means for storing beforehand comparison data representing a correlative relationship between a position of the spiral type membrane elements along the axial line direction and a standard value obtained from the sensor; and
data comparing means for comparing the data obtained by the data obtaining means with the comparison data.

According to the present invention, the mounting member provided with a sensor is mounted on each of a plurality of spiral type membrane elements that are disposed and arranged in an axial line direction. Therefore, it is possible to obtain data in which the data obtained from these sensors and the position of each of the spiral type membrane elements, on which the mounting member provided with the sensor is mounted, in an axial line direction within the spiral type membrane filtering device are in correspondence.
By comparing the data obtained in this manner with the comparison data, the cause of change occurring within the spiral type membrane filtering device can be specified more definitely, and a suitable maintenance can be carried out in accordance with the cause, so that the spiral type membrane filtering device can be managed with a higher precision.

A membrane filtering device managing system according to a fourteenth aspect of the present invention relates to the membrane filtering device managing system, comprising instruction signal outputting means for outputting an instruction signal related to operation of the spiral type membrane filtering device based on a result of comparison by the data comparing means.

According to the present invention, the cause of change occurring within the spiral type membrane filtering device can be specified more definitely, and an instruction signal that accords to the cause can be output, so that a more suitable maintenance can be carried out, and the spiral type membrane filtering device can be managed with a higher precision.

A membrane filtering device managing method according to a fifteenth aspect of the present invention relates to the membrane filtering device managing method for managing the spiral type membrane elements that are disposed in a plurality and arranged in an axial line direction in the spiral type membrane filtering device, the membrane filtering device managing method comprising:
a data obtaining step for obtaining data from the sensor; and
a data comparing step for comparing the data obtained by the data obtaining step with comparison data representing a correlative relationship between a position of the spiral type membrane elements along the axial line direction and a standard value obtained from the sensor.

According to the present invention, a membrane filtering device managing method producing the same effects as the membrane filtering device managing system according to the thirteenth aspect of the present invention can be provided.

A membrane filtering device managing method according to a sixteenth aspect of the present invention relates to the membrane filtering device managing method, comprising an instruction signal outputting step for outputting an instruction signal related to operation of the spiral type membrane filtering device based on a result of comparison by the data comparing step.

According to the present invention, a membrane filtering device managing method producing the same effects as the membrane filtering device managing system according to the fourteenth aspect of the present invention can be provided.

### EFFECTS OF THE INVENTION

According to the present invention, the sensor or the power generating section is provided in a mounting member that is attachable and detachable to a spiral type membrane element. Therefore, even if the spiral type membrane element is to be replaced, the sensor or the power generating section can be reused by re-mounting the mounting member to a new spiral type membrane element. Also, according to the present invention, the cause of change occurring in a spiral type membrane filtering device can be specified more definitely, and a suitable maintenance can be carried out in accordance with the cause, so that the spiral type membrane filtering device can be managed with a higher precision.

### BRIEF DESCRIPTION OF THE DRAWINGS

- Fig. 1: is a schematic cross-sectional view illustrating one example of a spiral type membrane filtering device according to a first embodiment of the present invention.
- Fig. 2: is a perspective view illustrating an internal construction of a spiral type membrane element of Fig. 1.
- Fig. 3: is a schematic perspective view illustrating one example of an internal construction of an interconnector, showing a state in which the internal construction is seen through.
- Fig. 4: is a block diagram showing an electric construction of the spiral type membrane filtering device of Fig. 1.
- Fig. 5: is a schematic perspective view illustrating one example of an internal construction of a spiral type membrane element in a spiral type membrane filtering device according to a second embodiment of the present invention, showing a state in which the internal construction is seen through.
- Fig. 6: is a block diagram showing one example of a membrane filtering device managing system for managing a membrane filtering device.

### DESCRIPTION OF REFERENCE NUMERALS

- 10: spiral type membrane element
- 12: separation membrane
- 14: permeation side flow path material
- 16: membrane member
- 18: supply side flow path material
- 20: central pipe
- 21: blade wheel
- 25: coil
- 26: power generating section
- 27: space
- 28: raw water flow path
- 31: battery
- 32: flow rate sensor
- 33: electric conductivity sensor
- 34: temperature sensor
- 35: fouling detection sensor
- 36: communication section
- 37: RFID tag
- 38: communication device
- 40: outer vessel
- 42: interconnector
- 44: concentrated water flow outlet
- 46: permeated water flow outlet
- 48: raw water flow inlet
- 50: spiral type membrane filtering device
- 121: blade wheel
- 125: coil
- 126: power generating section
- 200: management device
- 202: data comparing section
- 203: instruction signal outputting section
- 204: comparison data storing section

### BEST MODES FOR CARRYING OUT THE INVENTION

### First Embodiment

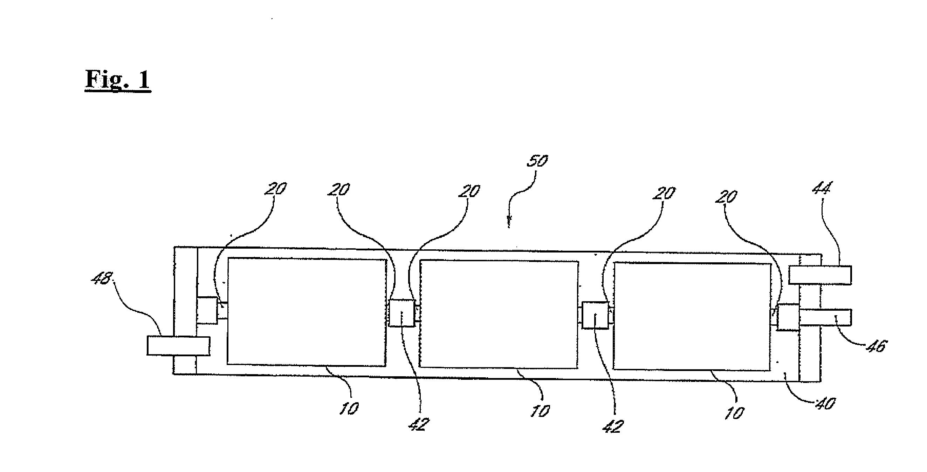

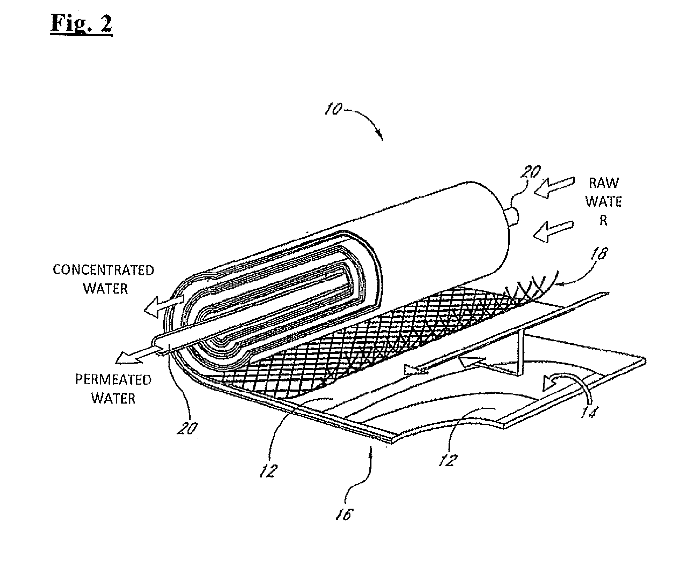

Fig. 1 is a schematic cross-sectional view illustrating one example of a spiral type membrane filtering device 50 according to a first embodiment of the present invention. Also, Fig. 2 is a perspective view illustrating an internal construction of a spiral type membrane element 10 of Fig. 1. This spiral type membrane filtering device 50 (hereinafter simply referred to as the "membrane filtering device 50") is constructed by arranging a plurality of spiral type membrane elements (hereinafter simply referred to as the "membrane elements 10") in a line within an outer vessel 40.

The outer vessel 40 is a tube body made of resin, which is referred to as a pressure-resistant vessel, and is formed, for example, with FRP (Fiberglass Reinforced Plastics). A raw water flow inlet 48 through which a raw water (raw liquid) such as waste water or sea water flows in is formed at one end of the outer vessel 40, and the raw water that flows in through the raw water flow inlet 48 is filtered by a plurality of membrane elements 10, whereby a purified permeated water (permeated liquid) and a concentrated water (concentrated liquid), which is a raw water after the filtration, can be obtained. A permeated water flow outlet 46 through which the permeated water flows out and a concentrated water flow outlet 44 through which the concentrated water flows out are formed at the other end of the outer vessel 40.

Referring to Fig. 2, the membrane element 10 is an RO (Reverse Osmosis) element that is formed in such a manner that a separation membrane 12, a supply side flow path material 18, and a permeation side flow path material 14 in a laminated state are wound in a spiral form around a central pipe 20.

More specifically, onto both sides of the permeation side flow path material 14 having a rectangular shape composed of a net-shaped member made of resin, the separation membranes 12 having the same rectangular shape are superposed and the three sides thereof are bonded, whereby a bag-shaped membrane member 16 having an opening at one side is formed. Then, the opening of this membrane member 16 is mounted onto the outer circumferential surface of the central pipe 20, and is wound around the central pipe 20 together with the supply side flow path material 18 composed of a net-shaped member made of resin, whereby the membrane element 10 is formed. The separation membrane 12 is formed, for example, by sequentially laminating a porous supporter and a skin layer (dense layer) on a non-woven cloth layer.

When a raw water is supplied through one end of the membrane element 10 formed in the above-described manner, the raw water passes within the membrane element 10 via a raw water path formed by the supply side flow path material 18 functioning as a raw water spacer. During this time, the raw water is filtered by the separation membrane 12, and the permeated water that is filtered from the raw water penetrates into a permeated water flow path formed by the permeation side flow path material 14 functioning as a permeated water spacer.

Thereafter, the permeated water that has penetrated into the permeated water flow path flows to the central pipe 20 side by passing through the permeated water flow path, and is guided into the central pipe 20 through a plurality of water-passing holes (not illustrated) formed in the outer circumferential surface of the central pipe 20. This allows that, through the other end of the membrane element 10, the permeated water flows out via the central pipe 20, and the concentrated water flows out via the raw water flow path formed by the supply side flow path material 18.

As shown in Fig. 1, regarding the plurality of membrane elements 10 that are housed within the outer vessel 40, the central pipes 20 of adjacent membrane elements 10 are connected with each other by a pipe-shaped interconnector (connecting section) 42. Therefore, the raw water that has flowed in through the raw water flow inlet 48 flows into the raw water flow path sequentially from the membrane element 10 on the raw water flow inlet 48 side, and the permeated water that has been filtered from the raw water by each membrane element 10 flows out through the permeated water flow outlet 46 via one central pipe 20 connected by the interconnector 42.
On the other hand, the concentrated water that has been concentrated by filtration of the permeated water by passing through the raw water flow path of each membrane element 10 flows out through the concentrated water flow outlet 44. As the interconnector 42, it is possible to use those made of resin such as ABS, vinyl chloride, or polyphenylene ether or those made of metal such as stainless steel; however, those made of resin are preferable in view of the facility in processing at the time of mounting a sensor or easiness of attachment and detachment.

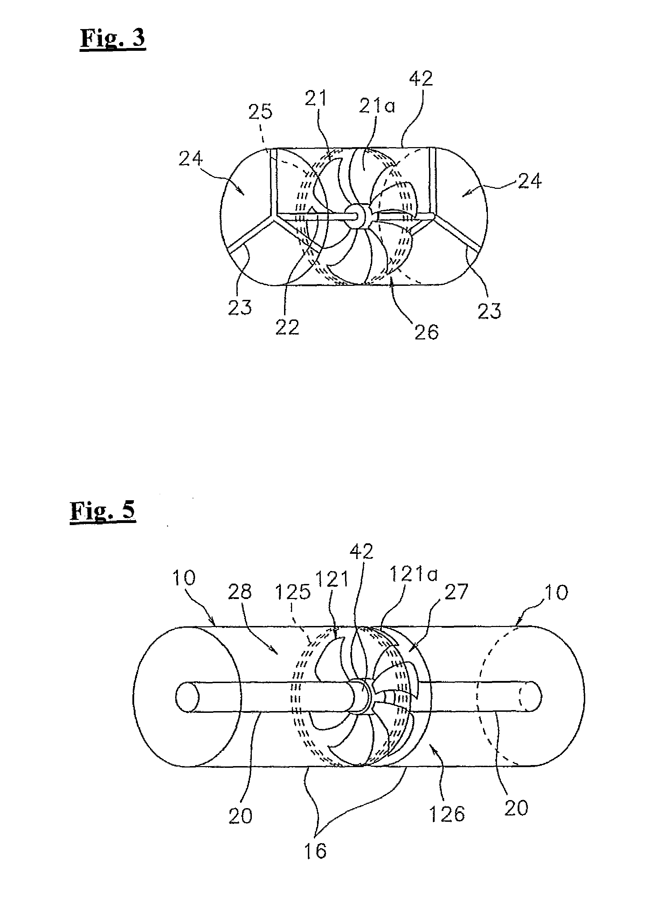

Fig. 3 is a schematic perspective view illustrating one example of an internal construction of the interconnector 42, showing a state in which the internal construction is seen through. In this example, within the interconnector 42, there is provided a blade wheel 21 serving as a rotor that rotates by the fluid pressure of the permeated water that flows within the interconnector 42. However, the rotor is not limited to the blade wheel 21, so that those having various shapes can be adopted as well. The interconnector 42 constitutes a mounting member that is attachable and detachable to the central pipe 20 of the membrane element 10.

Within the interconnector 42, there is disposed a main shaft 22 along the central axial line thereof, and the two ends of the main shaft 22 are supported by a supporting section 23 at the two ends of the interconnector 42. The supporting section 23 is made of a plurality of rod materials that extend radially relative to the central axial line of the interconnector 42, and the space between these rod materials form a water-passing hole 24 for passing the permeated water therethrough.

The blade wheel 21 has a plurality of sheets of blades 21a the respective tip ends of which extend up to the position close to the inner circumferential surface of the interconnector 42. Therefore, the permeated water that has flown into the interconnector 42 via the water-passing hole 24 at one end of the interconnector 42 passes within the interconnector 42 while being in contact with the blades 21a of the blade wheel 21, and flows out via the water-passing hole 24 at the other end of the interconnector 42, whereby the blade wheel 21 rotates by the fluid pressure of the permeated water that acts on the blades 21a.

A coil 25 is formed by winding a metal wire around the blade wheel 21 in the interconnector 42. Also, a magnet (not illustrated) is mounted at the tip end of each blade 21a of the blade wheel 21. Such a construction allows that, when the blade wheel 21 rotates, the magnetic field formed by the magnet around the coil 25 changes, whereby an induced electric current flows through the coil 25 by what is known as the electromagnetic induction. In other words, the magnet mounted on the blade wheel 21 and the coil 25 constitute a power generating section 26 that generates electric power based on the rotation of the blade wheel 21.

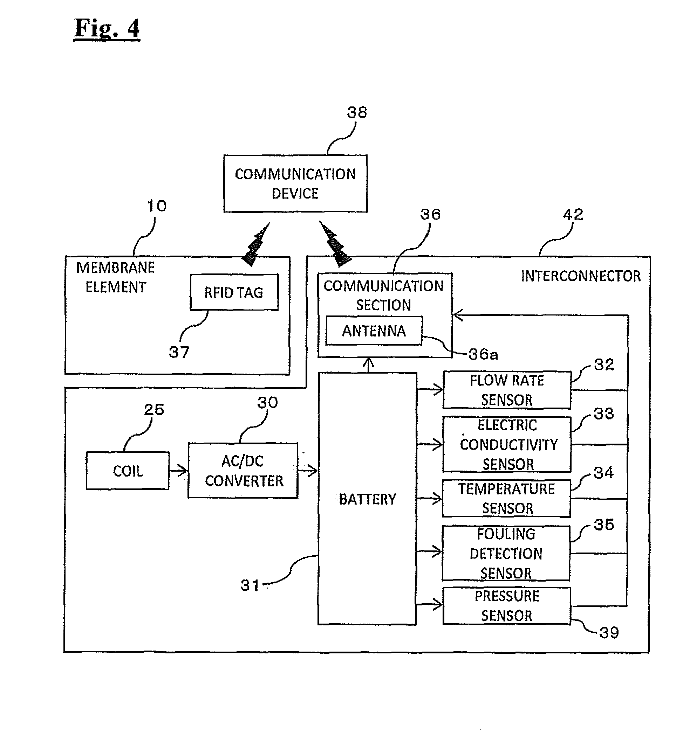

Fig. 4 is a block diagram showing an electric construction of the spiral type membrane filtering device 50 of Fig. 1. This membrane filtering device 50 includes, besides the coil 25, an AC/DC converter 30, a battery 31, a flow rate sensor 32, an electric conductivity sensor 33, a temperature sensor 34, a fouling detection sensor 35, a pressure sensor 39, a communication section 36, an RFID tag 37, and others.

Among the sections provided in the membrane filtering device 50, the coil 25, the AC/DC converter 30, the battery 31, the flow rate sensor 32, the electric conductivity sensor 33, the temperature sensor 34, the fouling detection sensor 35, the pressure sensor 39, and the communication section 36 are mounted on the interconnector 42. The property of the permeated water that passes within the interconnector 42 can be detected by using the flow rate sensor 32, the electric conductivity sensor 33, the temperature sensor 34, and the fouling detection sensor 35 that are mounted on the interconnector 42.
By adopting such a construction, the terminals of the sensor are hardly fouled, so that the stability of the detection precision can be maintained. Also, since there is no need to detect the water quality that is hardly stable such as raw water, the sensitivity of the sensor can be limited to a required range. Also, since the water quality for each membrane element 10 immediately after passing through the membrane can be detected, the abnormality or the performance of the membrane for each membrane element 10 can be confirmed. Also, even when an abnormality occurs only in the sensor, there is no need to replace the whole membrane element 10 which is expensive, so that the replacement is inexpensive and easy.
On the other hand, the RFID tag 37 is mounted on a membrane member 16 that forms the outer circumferential surface of the membrane element 10. However, the construction is not limited thereto, so that it is possible to adopt a construction in which the AC/DC converter 30, the battery 31, the communication section 36, and others are mounted on the parts of the membrane filtering device 50 other than the interconnector 42, for example, on the central pipe 20 of the membrane element 10, the outer vessel 40, or the like.

Also, it is possible to adopt a construction in which at least one of the various sensors such as the flow rate sensor 32, the electric conductivity sensor 33, the temperature sensor 34, the fouling detection sensor 35, and the pressure sensor 39, or the power generating section 26 is mounted on the parts of the membrane filtering device 50 other than the interconnector 42, for example, on the central pipe 20 of the membrane element 10, on the outer vessel 40, or the like. Further, it is possible to adopt a construction in which the RFID tag 37 is mounted on the parts of the membrane element 10 other than the membrane member 16, for example, on the central pipe 20.

The induced current generated in the coil 25 is converted from an alternating current (AC) to direct current (DC) by the AC/DC converter 30, and is supplied to the battery 31. The battery 31 is made of a secondary battery and constitutes a capacitor section that stores electric power that is supplied from the power generating section 26 via the AC/DC converter 30. The electric power stored in the battery 31 is supplied not only to various sensors such as the flow rate sensor 32, the electric conductivity sensor 33, the temperature sensor 34, and the fouling detection sensor 35 provided in the membrane filtering device 50 but also to other electric components such as the communication section 36.
The other electric components may include, for example, a position detection section such as a GPS (Global Positioning System). Here, it is also possible to adopt a construction such that the electric power stored in the battery 31 can be output to the outside from an electric power outputting section constituted of an electrode or the like.

The flow rate sensor 32, the electric conductivity sensor 33, the temperature sensor 34, and the fouling detection sensor 35 are sensors that respectively detect the property of the permeated water that flows within the interconnector 42, and are disposed in the inside of the interconnector 42. More specifically, the flow rate sensor 32 has a construction including the blade wheel 21, and detects the flow rate of the permeated water that flows within the interconnector 42 based on the rotation number of the blade wheel 21. In other words, the power generating section 26 constituted of the magnet mounted on the blade wheel 21 and the coil 25 generates electric power by using the blade wheel 21 of the flow rate sensor 32.

With such a construction, the blade wheel 21 provided in the flow rate sensor 32 rotates by the fluid pressure of permeated water when the permeated water is flowing within the interconnector 42, whereby the flow rate of the permeated water can be detected by the flow rate sensor 32 based on the rotation number thereof, and also power generation can be carried out in the power generating section 26 based on the rotation of the blade wheel 21. Therefore, the power generation can be carried out efficiently by using the blade wheel 21 provided in the flow rate sensor 32.

The electric conductivity sensor 33 is a sensor that detects the electric conductivity of the permeated water that flows within the interconnector 42. The temperature sensor 34 is a sensor that detects the temperature of the permeated water that flows within the interconnector 42, and can be constructed, for example, with a thermocouple. The fouling detection sensor 35 is a sensor that detects the fouling state of the permeated water that flows within the interconnector 42.
The pressure sensor 39 is disposed outside of the interconnector 42, and is a sensor that detects the pressure of the raw water that flows on the outside (later-mentioned space 27) of the interconnector 42, and can be constructed, for example, with a piezoelectric element, a strain gauge, or the like.
However, the sensor that is mounted on the mounting member such as the interconnector 42 is not limited to the sensors, so that any known sensor such as a physical sensor, a chemical sensor, or a smart sensor (sensor equipped with an information processing function) can be used in accordance with the characteristics thereof as long as it is a sensor that detects the property of the liquid that flows within the membrane filtering device 50.
Here, the property of the liquid that is detected by the sensor mounted on the mounting member such as the interconnector 42 may be, for example, a flow rate, pressure, electric conductivity, temperature, fouling circumstances (ion concentration and others), or the like.

The communication section 36 has an antenna 36a, and constitutes a wireless transmitting section that wirelessly transmits detection signals from various sensors such as the flow rate sensor 32, the electric conductivity sensor 33, the temperature sensor 34, the fouling detection sensor 35, and the pressure sensor 39 to the communication device 38. The antenna 36a of the communication section 36 can be formed, for example, by winding a metal wire around the interconnector 42.

The RFID tag 37 is a wireless tag that is provided with a storage medium capable of storing data and can transmit and receive data to and from the communication device 38 by non-contact communication using an electromagnetic wave. This RFID tag 37 may be of an active type having a capacitor section or may be of a passive type that does not have a capacitor section but obtains electric power by generating electromagnetic induction based on the electromagnetic wave from the communication device 38.

The RFID tag 37 can store data related to the membrane element 10 on which the RFID tag 37 is mounted. The data stored in this RFID tag 37 may be,
for example, position information of the membrane element 10, production history of the membrane element 10, performance data of the membrane element 10, the road map data of the membrane element 10, or the like.

### Second Embodiment

In the first embodiment, description has been given of a construction in which power generation is carried out based on the rotation of the rotor (blade wheel 21) provided in the interconnector 42. To summarize, the second embodiment is different from the first embodiment in that the rotor is provided outside of the interconnector 42.

Fig. 5 is a schematic perspective view illustrating one example of an internal construction of a spiral type membrane element 10 in a spiral type membrane filtering device 50 according to the second embodiment of the present invention, showing a state in which the internal construction is seen through. In this example, a space 27 is formed between the end surfaces of the membrane elements 10 that are positioned on the two sides with the interconnector 42 sandwiched therebetween.
This space 27 is a region through which the raw water flowing from the raw water flow path 28 formed by the supply side flow path material 18 within one membrane element 10 to the raw water flow path 28 within the other membrane element 10 passes, and constitutes a part of the raw water flow path 28.

In the space 27, there is disposed a blade wheel 121 serving as a rotor that is mounted to be rotatable relative to the interconnector 42. This blade wheel 121 has a plurality of sheets of blades 121a the respective tip ends of which extend up to the position close to the outer circumferential surface of the membrane element 10. Therefore, the raw water that flows from the raw water flow path 28 in one membrane element 10 to the raw water flow path 28 within the other membrane element 10 passes through the space 27 while being in contact with the blades 121 a of the blade wheel 121, whereby the blade wheel 121 rotates by the fluid pressure of the raw water that acts on the blades 121a.

A coil 125 is formed by winding a metal wire around the blade wheel 121 in one or both of the membrane elements 10 connected by the interconnector 42. Also, a magnet (not illustrated) is mounted at the tip end of each blade 121 a of the blade wheel 121. Such a construction allows that, when the blade wheel 121 rotates, the magnetic field formed by the magnet around the coil 125 changes, whereby an induced electric current flows through the coil 125 by what is known as the electromagnetic induction. In other words, the magnet mounted on the blade wheel 121 and the coil 125 constitute a power generating section 125 that generates electric power based on the rotation of the blade wheel 121.

With such a construction, the blade wheel 121 rotates by the fluid pressure of raw water when the raw water is flowing within the raw water flow path 28, whereby power generation is carried out in the power generating section 126 based on the rotation. Therefore, the power generation can be carried out efficiently with a simple construction such as providing the blade wheel 121 outside of the interconnector 42. However, the rotor is not limited to the blade wheel 121, and various shapes can be adopted for the rotor.

Here, the electric construction of the membrane filtering device 50 in the present embodiment is the same as the electric construction of the membrane filtering device 50 according to the first embodiment described with reference to Fig. 4, so that a detailed description thereof will be omitted here.

In the above embodiments, the interconnector 42 attachable and detachable to the membrane element 10 is provided with a sensor (for example, the flow rate sensor 32, the electric conductivity sensor 33, the temperature sensor 34, the fouling detection sensor 35, the pressure sensor 39, or the like) that detects the property of liquid such as raw water or permeated water that flows within the membrane filtering device 50, or the power generating section 26, 126. Therefore, even if the membrane element 10 is to be replaced, the sensor or the power generating section can be re-used by re-mounting the interconnector 42 onto a new membrane element 10. Also, since there is no need to add a change to the membrane element 10, a conventional membrane element 10 can be used as it is.

Also, in the above embodiments, a larger amount of electric power can be ensured by performing power generation in the power generating section 26, 126. In particular, since the electric power supplied from the power generating section 26, 126 can be stored in the battery 31, a further larger amount of electric power can be ensured, and each section provided in the membrane filtering device 50 can be operated by using the electric power.
Here, in general, the raw water flowing within the raw water flow path 28 has a larger fluid pressure than the permeated water flowing within the central pipe 20. Therefore, by providing a blade wheel 121 within the raw water flow path 28 as in the second embodiment, the power generation can be carried out more efficiently than in the case of the first embodiment.

Furthermore, in the above embodiments, by mounting an RFID tag 37 onto the membrane element 10, management of the processing characteristics of the membrane element 10 can be carried out by storing data in advance in the RFID tag 37 and reading out the data from the outside. Therefore, the management can be carried out at a higher precision based on the data stored in the RFID tag 37 and the data obtained in each section such as the above-described sensor.

In the above embodiments, description has been given of a construction in which power generation is carried out by using a rotor such as the blade wheel 21, 121 that is provided in the flow rate sensor 32. However, the present invention is not limited to such a construction so that it is possible to adopt a construction in which power generation is carried out by using a rotor provided separately from the flow rate sensor 32 or a construction in which power generation is carried out by using a different mechanism other than the rotor. The different mechanism may be, for example, a piezoelectric element or a strain gauge that generates voltage in accordance with the fluid pressure that is received from the liquid flowing within the membrane filtering device 50 such as the central pipe 20 or the raw water flow path 28.

Also, the present invention is not limited to a construction in which power generation is carried out using the fluid pressure of the liquid flowing within the central pipe 20 or the raw water flow path 28, so that it is possible to adopt a construction in which power generation is carried out in a different mode. For example, it is possible to conceive a construction in which, by generating numerous air bubbles in the permeated water that flows within the central pipe 20, power generation is carried out by using the energy of the air bubbles. In this case, an effect of cleaning the permeated water can be expected by action of the numerous air bubbles generated in the permeated water.

Also, the present invention is not limited to a construction in which the electric power supplied to an electronic component such as the sensor is generated, so that it is possible to adopt a construction in which the electric power is supplied by wireless electric power supply from the outside of the membrane filtering device 50.
In this case, it is possible to adopt a construction in which a power-receiving antenna made of an annular conduction wire is disposed at a position close to the inner circumferential wall of the outer vessel 40, and a power-feeding antenna made of an annular conduction wire is disposed at a position outside of the outer vessel 40 and opposite to the power-receiving antenna, whereby an electric power is wirelessly supplied at a predetermined frequency band from the power-feeding antenna to the power-receiving antenna.

Also, the present invention is not limited to a construction in which the sensor (for example, the flow rate sensor 32, the electric conductivity sensor 33, the temperature sensor 34, the fouling detection sensor 35, the pressure sensor 39, or the like) or the power generating section 26, 126 is mounted on the interconnector 42, so that it is possible to adopt a construction in which the sensor or the power generating section 26, 126 is mounted on another mounting member that is attachable and detachable to the membrane element 10.
The mounting member that is attachable and detachable to the membrane element 10 may be, for example, a seal holding member disposed at an end of the membrane element 10, an interconnector 42 that is mounted on the central pipe 20 of the membrane element 10, an element outer covering, or the like; however, the mounting member is preferably an interconnector 42 in view of the stability of data detection or facility of replacement when the sensor is disposed.

Further, in the above embodiments, description has been given of a case in which raw water such as waste water or sea water is filtered with use of a membrane filtering device 50; however, the present invention is not limited to this construction alone, so that it is possible to adopt a construction in which raw liquid other than water is filtered with use of the membrane filtering device 50.

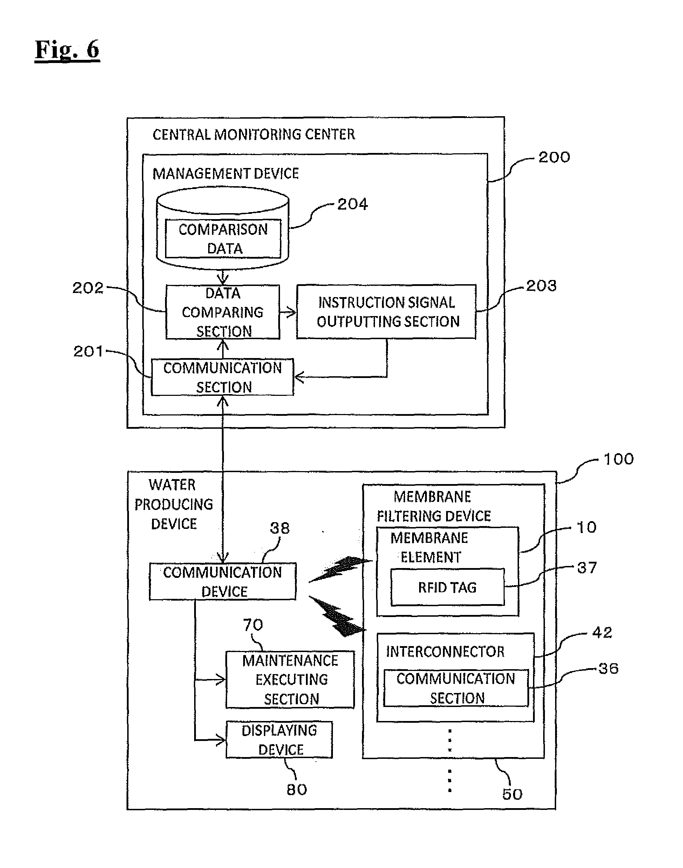

Fig. 6 is a block diagram showing one example of a membrane filtering device managing system for managing the membrane filtering device 50. In this membrane filtering device managing system, a purified permeated water can be produced by filtering raw water such as waste water or sea water with use of a water-producing device 100 equipped with numerous membrane filtering devices 50, and management of the water-producing device 100 can be carried out by a management device 200 disposed in the central monitoring center. The water-producing device 100 is provided with a plurality of racks that are referred to as trains, and numerous membrane filtering devices 50 are held by each train, and management of the processing characteristics is carried out train by train.

The data that are output from each sensor are wirelessly transmitted to the communication device 38 via the communication section 36, and are transmitted to the management device 200 of the central monitoring center via the communication device 38. However, the present invention is not limited to a construction in which the data from each sensor are wirelessly transmitted to the communication device 38, so that it is possible to adopt a construction in which each sensor is connected to the communication device 38 via a wire, whereby the data are transmitted in a wired manner.

The water-producing device 100 is provided with a maintenance executing section 70 for executing maintenance on each membrane filtering device 50, a displaying device 80 for performing various displays related to the state or the like of the water-producing device 100, and others in addition to the membrane filtering devices 50 and the communication device 38 described above. The maintenance executing section 70 is provided, for example, with a pressure valve for adjusting the pressure of the supplied raw water, a flow rate adjusting valve for adjusting the flow rate of the raw water, a chemical agent cleaning unit for cleaning the inside of the membrane filtering devices 50 by introducing a chemical agent, and the like.
Each section provided in the maintenance executing section 70 not only operates by direct operation of an operator but also is adapted to be capable of operating based on an instruction signal that is received from a management device 200 of a central monitoring center via a communication device 60. The displaying device 80 can be constructed, for example, with a liquid crystal display or the like.

The management device 200 of a central monitoring center is made, for example, of a computer, and is provided with a communication section 201, a data comparing section 202, an instruction signal outputting section 203, a comparison data storing section 204, and the like. The communication section 201 communicates with the communication device 38 of the water-producing device 100. The communication may be either in a wired manner or in a wireless manner. The communication section 201 constitutes data obtaining means for obtaining, via the communication device 38, the data from each sensor that is provided in the membrane filtering device 50.

The comparison data storing section 204 is comparison data storing means for storing in advance the comparison data for comparison with the obtained data from each sensor. The comparison data are made of data of correlative relationship between the position of the membrane element 10 along the axial line direction in the membrane filtering device 50 and a standard value that is respectively obtained from each sensor.
For example, the comparison data can be obtained by allowing the data obtained from each sensor provided in the interconnector 42 that is mounted on each membrane element 10 in a state in which the membrane filtering device 50 is normally operating (the state in which there is no need to perform maintenance) to correspond, as a standard value, to each position of the plurality of membrane elements 10 that are disposed at different positions along the axial line direction within the membrane filtering device 50. Here, the position information of the membrane element 10 can be stored into the RFID tag 37 as described above, and can be wirelessly transmitted to the communication device 38 from the RFID tag 37.

The data comparing section 202 is data comparing means for comparing the data obtained from each sensor provided in the membrane filtering device 50 with the comparison data stored in the comparison data storing section 204. Also, the instruction signal outputting section 203 is instruction signal outputting means for outputting an instruction signal related to operation of the membrane filtering device 50 based on a comparison result by the data comparing section 202.
However, it is possible to adopt a construction in which the determination by the data comparing section 202 is carried out by the operator. In this case, it is possible to adopt a construction in which the instruction signal is output based on the operation of the operator. Hereinafter, the process by these data comparing section 202 and instruction signal outputting section 203 will be described more specifically.

As the comparison data, it is possible to use, for example, comparison data in which the data respectively obtained from the flow rate sensor 32, the electric conductivity sensor 33, and the pressure sensor 39 in a state in which the membrane filtering device 50 is normally operating are regarded as standard values. In this case, by comparing the flow rate of the permeated water that is detected by the flow rate sensor 32, the electric conductivity of the permeated water that is detected by the electric conductivity sensor 33, and the pressure of the raw water that is detected by the pressure sensor 39 with the comparison data, a suitable maintenance can be carried out based on a comparison result thereof.

Here, in a state in which the membrane filtering device 50 is normally operating, the flow rate of the permeated water that is measured by the flow rate sensor 32 is inversely proportional to the position in the axial line direction within the membrane filtering device 50, and decreases according as it goes from the upstream side towards the downstream side within the membrane filtering device 50.
Also, the electric conductivity of the permeated water that is measured by the electric conductivity sensor 33 is almost constant irrespective of the position in the axial line direction within the membrane filtering device 50. Furthermore, the pressure of the raw water that is measured by the pressure sensor 39 is proportional to the position in the axial line direction within the membrane filtering device 50, and decreases according as it goes from the upstream side towards the downstream side within the membrane filtering device 50.

The processing by the data comparing section 202 is carried out by comparing and determining whether or not the data obtained from each sensor is within a predetermined range relative to the comparison data. For example, the comparison is made by determining whether or not the flow rate of the permeated water that is measured by each of the flow rate sensors 32 disposed at respectively different positions in the axial line direction in the membrane filtering device 50 is within a predetermined flow rate range with its center located at the comparison data of the flow rate corresponding to each position thereof.
The comparison is made by determining whether or not the electric conductivity of the permeated water that is measured by each of the electric conductivity sensors 33 disposed at respectively different positions in the axial line direction in the membrane filtering device 50 is within a predetermined electric conductivity range with its center located at the comparison data of the electric conductivity corresponding to each position thereof.
The comparison is made by determining whether or not the pressure of the raw water that is measured by each of the pressure sensors 39 disposed at respectively different positions in the axial line direction in the membrane filtering device 50 is within a predetermined pressure range with its center located at the comparison data of the pressure corresponding to each position thereof. Then, it is determined that there is no change if the value obtained from each sensor is within the range. Also, it is determined that there is decrease if the value is smaller than the range, and it is determined that there is increase if the value is larger than the range.

For example, when there is a decrease in the flow rate of the permeated water that is detected by the flow rate sensor 32 corresponding to a membrane element 10 (hereinafter referred to as the "upstream side membrane element 10") disposed at an end on the upstream side in the flow direction of the permeated water among the plurality of membrane elements 10 disposed and arranged in the axial line direction, there is a high possibility that a biofouling process has occurred.
Also, when there is an increase in the pressure of the raw water that is detected by the pressure sensor 39 corresponding to the upstream membrane element 10, there is a high possibility that a biofouling process has occurred.
Particularly, when there is a decrease in the flow rate of the permeated water that is detected by the flow rate sensor 32, or when there is an increase in the pressure of the raw water that is detected by the pressure sensor 39, or when there is no change in the electric conductivity of the permeated water that is detected by the electric conductivity sensor 33 in at least two sensors among the flow rate sensor 32, the pressure sensor 39, and the electric conductivity sensor 33 corresponding to the upstream membrane element 10, there is a particularly high possibility that a biofouling process has occurred.

A biofouling process is a phenomenon in which microorganisms are proliferated within the membrane filtering device 50, and muddiness is generated around the entrance of the membrane filtering device 50 by proliferation of the microorganisms, so that a tendency such as described above occurs in the measured value of each sensor.
When there is a high possibility that a biofouling process has occurred as described above, an instruction signal telling to the fact that, for example, alkali cleaning within the membrane filtering device 50 should be carried out is transmitted from the communication device 201 of the management device 200 to the communication device 38 of the water-producing device 100.
In the water-producing device 100, cleaning is carried out within the membrane filtering device 50 by introducing an alkaline cleaning agent from a chemical agent cleaning unit provided in the maintenance executing section 70 based on the received instruction signal.

However, the present invention is not limited to the construction such as described above, so that it is possible to adopt a construction in which the displaying device 80 displays to the fact that, for example, alkali cleaning within the membrane filtering device 50 should be carried out based on the received instruction signal, and the operator operates based on the display. Also, it is possible to adopt a construction in which the displaying device 80 displays to the fact that the method of preprocessing or daily management should be changed based on the received instruction signal.

When there is an increase in the flow rate of the permeated water that is detected by the flow rate sensor 32 corresponding to a membrane element 10 (hereinafter referred to as the "downstream side membrane element 10") disposed at an end on the downstream side in the flow direction of the permeated water among the plurality of membrane elements 10 disposed and arranged in the axial line direction, there is a high possibility that a biofouling process has occurred or deterioration of the membrane as a whole has occurred.
In such a case, verification as to whether a membrane deteriorating substance is flowing in or not is carried out, and when the membrane deteriorating substance is not flowing in as a result of verification, an instruction signal telling to the fact that, for example, alkali cleaning within the membrane filtering device 50 should be carried out is transmitted from the communication device 201 of the management device 200 to the communication device 38 of the water-producing device 100.
In the water-producing device 100, cleaning is carried out within the membrane filtering device 50 by introducing an alkaline cleaning agent from a chemical agent cleaning unit provided in the maintenance executing section 70 based on the received instruction signal.

However, the present invention is not limited to the construction such as described above, so that it is possible to adopt a construction in which the displaying device 80 displays to the fact that, for example, alkali cleaning within the membrane filtering device 50 should be carried out based on the received instruction signal, and the operator operates based on the display. Also, it is possible to adopt a construction in which the displaying device 80 displays to the fact that the method of preprocessing or daily management should be changed based on the received instruction signal.

When there is a sharp increase in the electric conductivity of the permeated water that is detected by the electric conductivity sensor 33 corresponding to each membrane element 10 or in the flow rate of the permeated water that is detected by the flow rate sensor 32 corresponding to each membrane element 10 from any position in the axial line direction, there is a high possibility that deterioration of the membrane as a whole has occurred or an abnormality has occurred in a membrane element 10 or an interconnector 42 located on the more upstream side than that position.
In such a case, verification as to whether a membrane deteriorating substance is flowing in or not is carried out, and when the membrane deteriorating substance is not flowing in as a result of verification, a signal telling to the fact that replacement of the membrane element 10 on the more upstream side than the position or confirmation of the interconnector 42 on the more upstream side than the position should be carried out is transmitted from the communication device 201 of the management device 200 to the communication device 38 of the water-producing device 100.
In the water-producing device 100, the displaying device 80 displays to the fact that replacement of the membrane element 10, confirmation of the interconnector 42, or the like should be carried out together with the position information based on the received instruction signal, and the operator operates based on the display.

However, the present invention is not limited to the construction such as described above, so that it is possible to adopt a construction in which replacement of the membrane element 10, confirmation of the interconnector 42, or the like is automatically carried out by the maintenance executing section 70 based on the received instruction signal. Also, it is possible to adopt a construction in which an instruction signal giving an instruction to send a membrane element 10 for replacement to the water-producing device 100 is transmitted from the central monitoring center to a member center.

When there is an increase in the flow rate of the permeated water that is detected by the flow rate sensor 32 corresponding to the upstream side membrane element 10, there is a high possibility that deterioration of the membrane as a whole has occurred or a scale has been produced.
The scale is deposited when the raw liquid is concentrated as it approaches the exit of the membrane filtering device 50 and the concentration of salts contained in the raw liquid exceeds the solubility thereof. Since the scale is liable to be produced near the exit of the membrane filtering device 50, tendency such as described above is generated in the measured value of each sensor.
In a case such as described above, verification as to whether a membrane deteriorating substance is flowing in or not is carried out, and when the membrane deteriorating substance is not flowing in as a result of verification, an instruction signal telling to the fact that, for example, acid cleaning within the membrane filtering device 50 should be carried out is transmitted from the communication device 201 of the management device 200 to the communication device 38 of the water-producing device 100.
In the water-producing device 100, cleaning is carried out within the membrane filtering device 50 by introducing an acidic cleaning agent from a chemical agent cleaning unit provided in the maintenance executing section 70 based on the received instruction signal.

However, the present invention is not limited to the construction such as described above, so that it is possible to adopt a construction in which the displaying device 80 displays to the fact that, for example, acid cleaning within the membrane filtering device 50 should be carried out based on the received instruction signal, and the operator operates based on the display.
Also, it is possible to adopt a construction in which the displaying device 80 displays to the fact that the method of preprocessing or daily management should be changed based on the received instruction signal. Alternatively, it is possible to adopt a construction in which the set value of the collection ratio (permeated water flow rate / raw water flow rate) is automatically reduced to optimize the collection ratio.

When there is a decrease in the flow rate of the permeated water that is detected by the flow rate sensor 32 corresponding to the downstream side membrane element 10, there is a high possibility that a scale has been produced. In such a case, an instruction signal telling to the fact that, for example, acid cleaning within the membrane filtering device 50 should be carried out is transmitted from the communication device 201 of the management device 200 to the communication device 38 of the water-producing device 100. In the water-producing device 100, cleaning is carried out within the membrane filtering device 50 by introducing an acidic cleaning agent from a chemical agent cleaning unit provided in the maintenance executing section 70 based on the received instruction signal.

However, the present invention is not limited to the construction such as described above, so that it is possible to adopt a construction in which the displaying device 80 displays to the fact that, for example, acid cleaning within the membrane filtering device 50 should be carried out based on the received instruction signal, and the operator operates based on the display.
Also, it is possible to adopt a construction in which the displaying device 80 displays to the fact that the method of preprocessing or daily management should be changed based on the received instruction signal. Alternatively, it is possible to adopt a construction in which the set value of the collection ratio (permeated water flow rate / raw water flow rate) is automatically reduced to optimize the collection ratio.

Here, the upstream side membrane element 10 may be a membrane element 10 that is disposed at the utmost end on the upstream side of the flow direction of the permeated water among the plurality of membrane elements 10 disposed and arranged in the axial line direction, or may be a membrane element 10 located within a range of a predetermined number to the downstream side from the utmost end of the upstream side.
Similarly, the downstream side membrane element 10 may be a membrane element 10 that is disposed at the utmost end on the downstream side of the flow direction of the permeated water among the plurality of membrane elements 10 disposed and arranged in the axial line direction, or may be a membrane element 10 located within a range of a predetermined number to the upstream side from the utmost end of the downstream side.

In the present embodiment, the interconnector 42 provided with a sensor is mounted on each of a plurality of membrane elements 10 that are disposed and arranged in an axial line direction. Therefore, it is possible to obtain data in which the data obtained from these sensors and the position of each of the membrane elements 10, on which the interconnector 42 provided with the sensor is mounted, in an axial line direction within the membrane filtering device 50 are in correspondence.
By comparing the data obtained in this manner with the comparison data, the cause of change occurring within the membrane filtering device 50 can be specified more definitely, and a suitable maintenance can be carried out in accordance with the cause, so that the membrane filtering device 50 can be managed with a higher precision.

Also, in the present embodiment, the cause of change occurring within the membrane filtering device 50 can be specified more definitely, and an instruction signal that accords to the cause can be output, so that a more suitable maintenance can be carried out, and the membrane filtering device 50 can be managed with a higher precision.

## Claims

1. A spiral type membrane filtering device equipped with a spiral type membrane element in which a separation membrane, a supply side flow path material, and a permeation side flow path material in a laminated state are wound in a spiral form around a central pipe, and a permeated liquid that is filtered by the separation membrane from a raw liquid supplied via a raw liquid flow path formed by the supply side flow path material is guided to the central pipe via the permeation side flow path material,
the spiral type membrane filtering device comprising:
a mounting member attachable and detachable to the spiral type membrane element; and
a sensor disposed at the mounting member for detecting a property of the liquid flowing within the spiral type membrane filtering device.

2. The spiral type membrane filtering device according to claim 1,
wherein the mounting member is an interconnector that connects between the central pipes of a plurality of the spiral type membrane elements.

3. The spiral type membrane filtering device according to claim 1, comprising a power generating section for generating electric power by using the sensor.

4. The spiral type membrane filtering device according to claim 3,
wherein the sensor comprises a rotor that rotates by a fluid pressure of the liquid flowing within the spiral type membrane filtering device, and
the power generating section generates electric power based on rotation of the rotor.

5. The spiral type membrane filtering device according to claim 4,
wherein the sensor is a flow rate sensor that detects the flow rate of the liquid based on the rotation number of the rotor.

6. A spiral type membrane filtering device equipped with a plurality of spiral type membrane elements in which a separation membrane, a supply side flow path material, and a permeation side flow path material in a laminated state are wound in a spiral form around a central pipe, and a permeated liquid that is filtered by the separation membrane from a raw liquid supplied via a raw liquid flow path formed by the supply side flow path material is guided to the central pipe via the permeation side flow path material, the spiral type membrane filtering device comprising:
a mounting member attachable and detachable to the spiral type membrane elements; and
a power generating section disposed at the mounting member.

7. The spiral type membrane filtering device according to claim 6,
wherein the power generating section generates electric power by a fluid pressure of the liquid flowing within the spiral type membrane filtering device.

8. The spiral type membrane filtering device according to claim 7, comprising a rotor that rotates by a fluid pressure of the liquid flowing within the spiral type membrane filtering device, wherein the power generating section generates electric power based on rotation of the rotor.

9. The spiral type membrane filtering device according to claim 8, comprising a flow rate sensor that detects the flow rate of the liquid based on the rotation number of the rotor.

10. The spiral type membrane filtering device according to any one of claims 3 to 9,
comprising a capacitor section for storing electric power supplied from the power generating section.

11. The spiral type membrane filtering device according to any one of claims 1 to 9,
comprising a wireless tag attached to the spiral type membrane element.

12. A mounting member attachable and detachable to a spiral type membrane element in which a separation membrane, a supply side flow path material, and a permeation side flow path material in a laminated state are wound in a spiral form around a central pipe, and a permeated liquid that is filtered by the separation membrane from a raw liquid supplied via a raw liquid flow path formed by the supply side flow path material is guided to the central pipe via the permeation side flow path material, the mounting member comprising a sensor or a power generating section.

13. A membrane filtering device managing system for managing the spiral type membrane elements that are disposed in a plurality and arranged in an axial line direction in a spiral type membrane filtering device according to any one of claims 1 to 5,
the membrane filtering device managing system comprising:
data obtaining means for obtaining data from the sensor;
comparison data storing means for storing beforehand comparison data representing a correlative relationship between a position of the spiral type membrane elements along the axial line direction and a standard value obtained from the sensor; and
data comparing means for comparing the data obtained by the data obtaining means with the comparison data.

14. The membrane filtering device managing system according to claim 13, comprising instruction signal outputting means for outputting an instruction signal related to operation of the spiral type membrane filtering device based on a result of comparison by the data comparing means.

15. A membrane filtering device managing method for managing the spiral type membrane elements that are disposed in a plurality and arranged in an axial line direction in a spiral type membrane filtering device according to any one of claims 1 to 5, the membrane filtering device managing method comprising:
a data obtaining step for obtaining data from the sensor; and
a data comparing step for comparing the data obtained by the data obtaining step with comparison data representing a correlative relationship between a position of the spiral type membrane elements along the axial line direction and a standard value obtained from the sensor.

16. The membrane filtering device managing method according to claim 15, comprising an instruction signal outputting step for outputting an instruction signal related to operation of the spiral type membrane filtering device based on a result of comparison by the data comparing step.
